(19) Europäisches Patentamt
European Patent Office
Office européen des brevets

(11) Veröffentlichungsnummer: **0 020 319**
**B1**

(12) **EUROPÄISCHE PATENTSCHRIFT**

(45) Veröffentlichungstag der Patentschrift: 02.11.83

(21) Anmeldenummer: **80890059.1**

(22) Anmeldetag: **28.05.80**

(51) Int. Cl.³: **B 29 H 5/00,** B 29 H 7/00, B 29 F 1/10

(54) Formenhohlraum.

(30) Priorität: **29.05.79 DE 2921668**

(43) Veröffentlichungstag der Anmeldung: **10.12.80 Patentblatt 80/25**

(45) Bekanntmachung des Hinweises auf die Patenterteilung: **02.11.83 Patentblatt 83/44**

(84) Benannte Vertragsstaaten: **CH FR GB LI NL SE**

(56) Entgegenhaltungen:
**DE - A - 2 553 304**
**DE - A - 2 747 157**
**DE - C - 832 489**
**GB - A - 1 431 460**
**US - A - 2 364 962**
**US - A - 2 637 073**

(73) Patentinhaber: **Semperit Aktiengesellschaft, Modecenterstrasse 22, A-1031 Wien (AT)**

(72) Erfinder: **Artner, Josef, Dr. Kollmannstrasse 27, D-8360 Deggendorf (DE)**

Formenhohlraum

Formenhohlraum zur Anformung und Vulkanisation querschnittsgleicher Sonderformen an – einen Verankerungssteg aufweisende – Dichtungsprofile aus elastomerem Material, z.B. von Winkelstücken zur Verbindung gerader Dichtungsprofilstücke zu Rahmendichtungen, wobei der Formenhohlraum zumindest eine Formöffnung zur Aufnahme des Endes des zu verbindenden Dichtungsprofils aufweist.

Zur Herstellung von Rahmendichtungen besteht die Möglichkeit der Verklebung der endlosen Profile im Bereich der Ecken, die nicht extrudiert werden können. Diese Methode ist jedoch sowohl in funktioneller wie auch kostenmässiger Hinsicht nachteilig und wird nur mehr selten angewandt.

Eine Weiterentwicklung besteht darin, die aus einer Ecke bestehende Sonderform der Rahmendichtung in einer Spritzform an die endlosen Profile anzuformen und durch Vulkanisation miteinander zu verbinden. Dabei erhält man einen weitestgehend homogenen Dichtungsrahmen mit dauerhaften Verbindungsstellen.

Ein störendes Problem ergibt sich jedoch an der Verbindungsstelle von Sonderform und endlosem Profil besonders im Bereich der Verankerungsstege. Diese sind häufig relativ dünn und weisen eine zahnartige Rippung auf, so dass beim Einschieben des Profilendes in die Formöffnung die Reibung gross ist und damit der infolge seiner geringen Querschnittsfläche ohnehin schwache Verankerungssteg deformiert wird. Dies wirkt sich sehr ungünstig auf die Verankerung des Dichtungsrahmens und damit auch auf die Dichtwirkung selbst aus.

Eine Bereinigung dieses Problems durch Vergrösserung der Formöffnung im Bereich des Verankerungssteges brachte jedoch ein Austreten des in den Formhohlraum für die Sonderform injizierten Materials mit sich, so dass im Bereich der Verbindungsstelle eine Verdickung in Kauf genommen werden musste.

Ziel der vorliegenden Erfindung ist die Ausschaltung obgenannter Nachteile, indem der Hohlraum für den Verankerungssteg im Bereich der Formöffnung im Querschnitt grösser ausgebildet ist, so dass beim Einschieben des Profilendes im Bereich des Verankerungssteges die Reibung vermindert ist und wobei am Übergang vom Formenhohlraum zur Formöffnung ein Steg angeordnet ist, der an der Stelle der Anformung eine Unterbrechung des Verankerungssteges bewirkt.

Diese Unterbrechung des Verankerungssteges verursacht keine funktionelle Störung des Dichtungsprofiles, da die eigentlichen Dichtrippen ja ununterbrochen sind. Der Steg zwischen Formenhohlraum und Formöffnung bewirkt eine Abdichtung des Teiles des Formhohlraumes, der zur Formung des Ankersteges dient, gegen den etwas querschnittsgrösseren Teil der Formöffnung für den Ankersteg, so dass bei Einspritzen des fliessfähigen Elastomers dieses nicht in den durch die Querschnittsvergrösserung verursachten Spalt zwischen Ankerfuss und ihn aufnehmender Wandung gelangen kann.

Ein weiterer Vorteil des Steges liegt in seiner Wirkung als Anschlag, wodurch die Sonderform bei jedem Einspritzvorgang das gleiche Volumen aufweist, wobei auch der Vorgang des Einschiebens rascher vor sich gehen kann.

Im folgenden wird die Erfindung anhand von Zeichnungen beispielhaft näher erläutert:

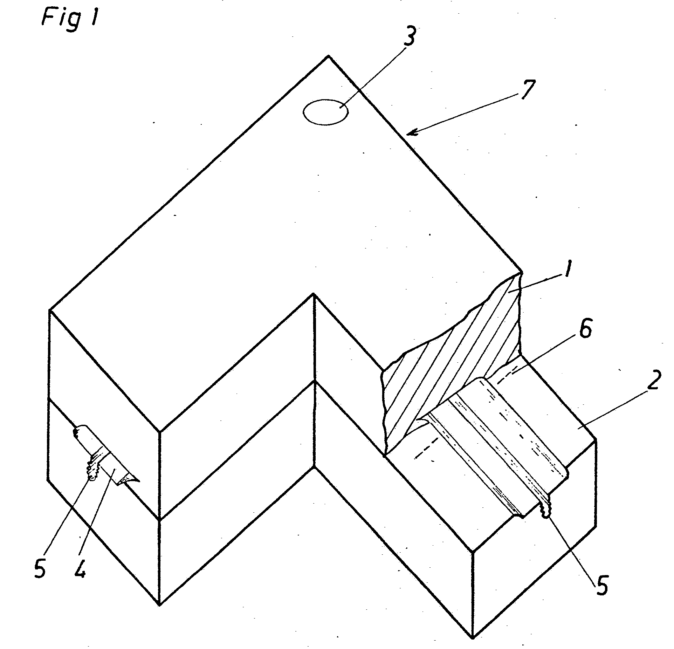

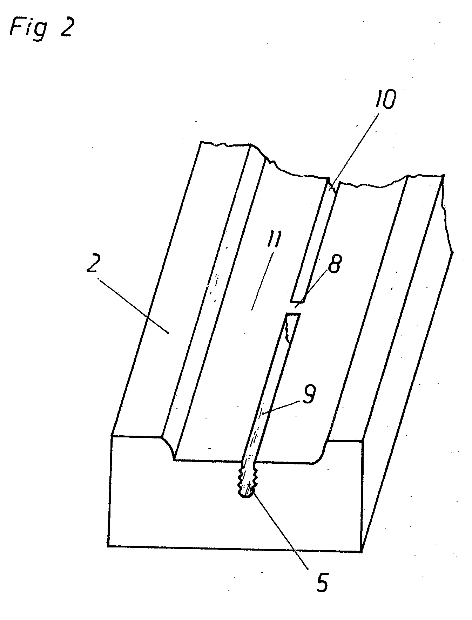

Es zeigen die Fig. 1 in schematischer Weise eine Spritzform nach dem Stand der Technik und Fig. 2 einen Ausschnitt mit dem Erfindungsmerkmal.

Die beiden Formhälften 1, 2 formen eine Eckverbindung, die im Querschnitt dem in die Formöffnung 4 gesteckten – in der Zeichnung nicht dargestellten – endlosen Dichtungsprofil entspricht. Das Elastomer wird durch die Öffnung 3 eingebracht und mit hohem Druck in dem durch die beiden Formhälften 1, 2 einerseits und die in die Formöffnungen 4 gesteckten Dichtungsprofile anderseits begrenzten Formenhohlraum geformt und durch die Vulkanisation mit den angrenzenden Dichtungsprofilen verbunden. Die infolge der grösseren Oberfläche bedingte höhere Reibung sowie die relativ geringe Querschnittsfläche des Verankerungssteges erschweren das Einschieben der endlosen Dichtungsprofile in die Formöffnung 4, das etwa bis zur halben Schenkellänge 6 der Form 7 erfolgt (Fig. 1).

Der Steg 8 in Fig. 2 unterbricht den Hohlraum 5 für den Verankerungssteg und wirkt als Anschlag für das im Bereich 9 einzuschiebende Profilende. Wird nun Elastomer in den Formenhohlraum 10 durch die Öffnung 3 eingebracht, so kommt es bei 11 zur Verbindung der Sonderform mit dem eingeschobenen Profilende. Nach Entformung der zu einer Ecke geformten und verbundenen Dichtungsprofile ist der Verankerungssteg am Übergang zur Sonderform in einer der Breite des Steges 8 entsprechenden Länge unterbrochen. Dies wirkt sich jedoch in keiner Weise als störend aus. Der Vorteil aus der Verwendung eines Steges 8 ergibt sich daraus, dass der Bereich 9 vor dem Steg 8 im Querschnitt grösser ausgebildet werden kann, ohne dass ein Materialaustritt befürchtet werden muss. Auf diese Weise kommt es während des Profileinschiebens zu keiner Reibung im Bereich des Verankerungssteges.

**Patentanspruch**

Formenhohlraum (10) einer Spritzform (7) zur Anformung und Vulkanisation querschnittsgleicher Sonderformen an einen Verankerungssteg aufweisende Dichtungsprofile aus elastomerem Material, z.B. von Winkelstücken zur Verbindung gerader Dichtungsprofilstücke zu Rahmendichtungen, wobei der Formenhohlraum zumindest eine Formöffnung (4) zur Aufnahme des Endes des zu verbindenden Dichtungsprofils aufweist, dadurch gekennzeichnet, dass der Hohlraum (5) für den Verankerungssteg im Bereich (9) der Formöffnung (4) im Querschnitt grösser ausgebildet ist, so dass beim Einschieben des Profilendes im Bereich des Verankerungssteges die Reibung vermindert ist und wobei am Übergang vom Formenhohlraum (10) zur Formöffnung (4) ein Steg (8) angeordnet ist, der an der Stelle der Anformung eine Unterbrechung des Verankerungssteges bewirkt.

## Claim

A mould cavity (10) of an injection mould (7) for forming and vulcanizing special shaped elements of similar cross-section and consisting of elastomeric material, as sealing profiles having an anchoring cross-piece, for example, of angled pieces which serve to connect straight sealing profiled pieces to form frame-shaped seals, in which the mould cavity has at least one mould aperture (4) to receive the end of the sealing profile to be connected, characterised in that in the region (9) of the mould aperture (4), the cavity (5) for the anchoring cross-piece is so designed as to be larger in cross-section, so that when inserting the end of the profile, the friction is reduced in the region of the anchoring cross-piece, and where at the junction of the mould cavity (10) with the mould aperture (4), there is arranged a cross-piece (8) which produces an interruption of the anchoring cross-piece.

## Revendication

Cavité de moulage (10) d'un moule à injection (7) pour la formation et la vulcanisation de formes spéciales de même section transversale sur des profilés d'étanchéité, présentant une nervure d'ancrage, en matériau élastomère, par exemple de pièces d'angle pour la réunion de pièces profilées d'étanchéité rectilignes pour former des joints d'étanchéité en forme de cadre, la cavité de moulage comportant au moins une ouverture de moule (4) pour recevoir l'extrémité du profilé d'étanchéité devant être réuni, caractérisée par le fait que la cavité de moulage (5) pour la barrette d'ancrage a une section transversale plus importante dans la région (9) de l'ouverture de moule (4), de sorte que lors de l'introduction de l'extrémité de profilé dans la région de la barrette d'ancrage, le frottement est réduit, et une barrette (8), qui provoque une interruption de la barrette d'ancrage au niveau du point de formage, étant disposée au niveau du passage de la cavité de moulage (10) à l'ouverture de moule (4).

Fig 1

Fig 2